Europäisches Patentamt

European Patent Office

Office européen des brevets

(11) Numéro de publication: **0 309 306 B1**

# FASCICULE DE BREVET EUROPEEN

(45) Date de publication de fascicule du brevet: **16.06.93** (51) Int. Cl.⁵: **H04L 27/22**

(21) Numéro de dépôt: **88402246.8**

(22) Date de dépôt: **07.09.88**

(54) **Procédé de détection de faux accrochages du signal référence sur le signal à démoduler en démodulation numérique cohérente et dispositif mettant en oeuvre un tel procédé.**

(30) Priorité: **18.09.87 FR 8712961**

(43) Date de publication de la demande:
**29.03.89 Bulletin 89/13**

(45) Mention de la délivrance du brevet:
**16.06.93 Bulletin 93/24**

(84) Etats contractants désignés:
**BE DE FR GB IT NL SE**

(56) Documents cités:
**EP-A- 0 200 271**
**DE-B- 2 627 446**
**US-A- 4 514 855**

(73) Titulaire: **ALCATEL TELSPACE**
**5, rue Noel Pons**
**F-92734 Nanterre Cédex(FR)**

(84) Etats contractants désignés:
**BE DE FR GB IT NL**

(73) Titulaire: **ALCATEL N.V.**
**Strawinskylaan 535**
**NL-1077 XX Amsterdam(NL)**

(84) Etats contractants désignés:
**SE**

(72) Inventeur: **Lopez, Pierre**
**14, Rue de Torcy**
**F-75018 Paris(FR)**

(74) Mandataire: **Weinmiller, Jürgen et al**
**Lennéstrasse 9 Postfach 24**
**W-8133 Feldafing (DE)**

# Description

L'invention concerne un procédé de détection de faux accrochages (ou "false-locks" en langue anglaise) du signal référence sur le signal à démoduler en démodulation numérique cohérente et un dispositif mettant en oeuvre un tel procédé.

Un premier type de chaînes de réception, classiques en hyperfréquences, comporte en série après l'antenne de réception un filtre de bande hyperfréquence suivi d'un amplificateur faible bruit, puis un mélangeur réalisant une transposition en fréquence intermédiaire au moyen d'un oscillateur local de réception. Une telle chaîne comporte ensuite un préamplificateur à fréquence intermédiaire, des cellules de correction de temps de propagation de groupe, et un amplificateur à fréquence intermédiaire. Le circuit de démodulation du signal à fréquence intermédiaire permet alors de restituer le signal en bande de base, le signal codé étant restitué après traitement du signal en bande de base. Dans de telles chaînes de réception, la double transposition d'hyperfréquence en fréquence intermédiaire, puis de fréquence intermédiaire en bande de base, conduit à utiliser tout un ensemble de circuits en fréquence intermédiaire, avec en particulier un oscillateur local.

Un second type de chaîne de réception hyperfréquence permet de réaliser à partir d'un signal hyperfréquence reçu, une démodulation directe avec un nombre réduit d'éléments, les circuits à fréquence intermédiaire étant supprimés.

Ainsi le brevet US 4559499 décrit un dispositif de démodulation directe, en hyperfréquence, d'un signal modulé résultant du mélange de deux porteuses en quadrature modulées par des signaux numériques, qui comporte un circuit de modulation, dont l'entrée est couplée à l'entrée de signal reçu, associé à un oscillateur à la fréquence porteuse du signal reçu, commandable pour que la phase de la porteuse issue de l'oscillateur coïncide avec la phase du signal reçu, le circuit de démodulation comportant un séparateur relié aux premières entrées de deux mélangeurs symétriques, un coupleur introduisant sur l'une des voies un déphasage de 90° dont les sorties sont reliées aux secondes entrées des deux mélangeurs, et des filtres passe-bas reliées aux sorties des mélangeurs délivrant les signaux numériques démodulés.

Dans tout système à démodulation cohérente, il est nécessaire d'avoir une référence de phase, celle-ci est obtenue par récupération de la porteuse : l'information est en effet contenue dans la phase de cette porteuse.

Quel que soit le type de démodulation directe ou avec transposition en fréquence intermédiaire, il existe des "faux accrochages" du signal référence sur le signal à démoduler, pour lesquels on obtient une information de phase erronée qui ne peut être normalement corrigée. Ces faux accrochages sont situés, dans le cas d'une modulation quatre états de phase par exemple, aux multiples du quart du débit numérique de part et d'autre de la fréquence centrale.

Ces faux accrochages sont donc d'autant plus rapprochés de la fréquence de la porteuse que le débit de transmission est faible ce qui nécessite une stabilité de VCO ("Voltage Control Oscillator"), notamment en température, assez importante, voire difficile à obtenir en particulier lorsque le débit est faible et la fréquence de la porteuse élevée.

Lorsque la stabilité du VCO (dF/FO) est du même ordre de grandeur que l'écart entre la fréquence des faux accrochages et la fréquence de la porteuse FO, il est impossible aux comparateurs de phase lors de la phase de recherche (recherche en fréquence qui doit être supérieure à la dérive du VCO afin de permettre l'accrochage) de différencier le bon accrochage d'un faux accrochage.

L'invention a pour objet de résoudre ce problème.

Elle propose, donc, un procédé de détection de faux accrochages de fréquence entre un signal issu d'un oscillateur local et un signal d'entrée à démoduler en démodulation cohérente à plusieurs états de phase, caractérisé en ce qu'il comprend:

- une étape de comparaison bit à bit entre le niveau du signal d'entrée après démodulation et avant régénération, et le niveau du signal d'entrée après régénération, à un instant prédéterminé du temps bit dudit signal d'entrée où le diagramme de l'oeil dudit signal d'entrée démodulé non régénéré présente des transitions lorsqu'un faux accrochage de fréquence est réalisé et où le diagramme de l'oeil dudit signal d'entrée démodulé non régénéré ne présente pas de transitions lorsqu'un vrai accrochage de fréquence est réalisé;
- une étape de correction éventuelle dudit signal issu dudit oscillateur local, de manière à accrocher celui-ci, en fréquence et en phase, sur ledit signal d'entrée à démoduler.

Avantageusement, ce procédé est utilisable dans tous les systèmes de transmission utilisant des procédés de modulation numérique à 2, 4 ou 8 états de phase par exemple.

Plus particulièrement, le montage décrit précédemment est utilisé pour un faisceau hertzien à modulation numérique à 4 états de phase.

Avantageusement, ce procédé ne dépend ni du débit numérique, ni de la nature de la modulation, ni de la fréquence porteuse.

Avantageusement, l'information que l'on obtient est valable quel que soit le type de démodulation cohérente utilisé: on peut ainsi travailler à faible débit numérique ou en démodulation directe quel que soit le débit.

L'invention concerne également un dispositif de détection de faux accrochages de fréquence, dans une chaîne de réception comportant un circuit de démodulation directe d'un signal modulé résultant du mélange de deux porteuses en quadrature modulées par des signaux numériques dont l'entrée est couplée à l'entrée de signal reçu, associé à un oscillateur à la fréquence porteuse du signal reçu, commandable pour que la phase du signal issu dudit oscillateur coïncide avec la phase dudit signal reçu, et délivrant lesdits signaux numériques démodulés, et comportant en outre un estimateur de phase à deux entrées couplées aux sorties de signaux numériques démodulés, ledit estimateur de phase délivrant un signal fonction de l'écart de phase entre la porteuse reçue et ledit signal issu dudit oscillateur à l'entrée de commande dudit oscillateur par l'intermédiaire d'un filtre intégrateur de boucle, caractérisé en ce qu'il comprend un circuit de comparaison situé sur l'une des deux voies véhiculant lesdits signaux numériques démodulés, entre l'entrée et la sortie d'un circuit de régénération, ledit circuit de comparaison effectuant une comparaison bit à bit entre le niveau dudit signal d'entrée de la voie considérée et le niveau du signal régénéré, à un instant prédéterminé du temps bit où le diagramme de l'oeil dudit signal d'entrée de la voie considérée présente des transitions lorsqu'un faux accrochage de fréquence est réalisé et où le diagramme de l'oeil dudit signal d'entrée de ladite voie considérée ne présente pas de transitions lorsqu'un vrai accrochage de fréquence est réalisé, ledit circuit de comparaison réalisant une éventuelle correction dudit signal issu dudit oscillateur local, de manière à accrocher celui-ci, en fréquence et en phase, sur ledit signal d'entrée à démoduler.

Avantageusement, le dispositif décrit donne une information permettant la récupération de la porteuse dans le cas d'une porteuse modulée par exemple en 2, 4, 8 états de phase, dans le cas où il y a, par exemple, transposition en fréquence intermédiaire ou même démodulation directe.

Les caractéristiques et avantages de l'invention ressortiront d'ailleurs de la description qui va suivre, à titre d'exemple non limitatif, en référence aux figures annexées sur lesquelles :

- la figure 1 représente une chaîne de réception dans laquelle est mis en évidence le dispositif selon l'invention,
- la figure 2 est un diagramme explicatif,
- la figure 3 représente un exemple de réalisation du dispositif selon l'invention,
- la figure 4 représente une série de courbes illustrant le fonctionnement du circuit représenté à la figure 3.

Dans la suite de la description la démodulation considérée sera une démodulation directe à quatre états de phase, mais l'invention n'est absolument pas limitée à ce type de modulation.

Cet exemple a été choisi car une démodulation directe à faible débit accentue le phénomène de faux accrochages.

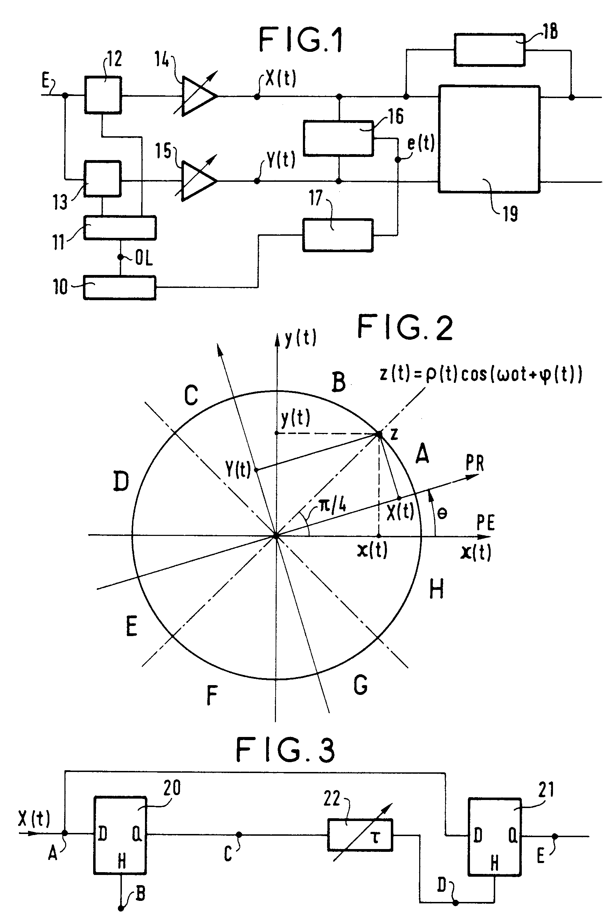

La figure 1 représente le schéma synoptique d'un mode de réalisation d'une chaîne de réception.

Dans le mode de réalisation décrit, le signal reçu en entrée E est constitué de deux porteuses en quadrature de phase modulées par deux signaux numériques synchrones et formant un signal modulé à quatre états de phase. Ce circuit comporte également une entrée de signal d'oscillation locale OL reliée à la sortie d'un oscillateur 10 commandé en tension.

L'entrée de signal d'oscillation locale OL est reliée à l'entrée d'un coupleur 3 dB (11), dont les sorties sont déphasées l'une par rapport à l'autre de 90°. Les deux sorties de ce coupleur 3 dB, sont reliées aux secondes entrées de deux mélangeurs linéaires 12 et 13 dont les premières entrées reçoivent le signal d'entrée E. La fréquence de l'oscillateur local est égale à la fréquence porteuse du signal reçu.

Les séquences de démodulation en bande de base sont ensuite appliqués aux entrées de deux amplificateurs à commande automatique de gain 14 et 15. Les sorties de ces amplificateurs, qui fournissent les trains numériques démodulés $X(t)$ et $Y(t)$, sont reliées aux entrées d'un circuit estimateur de phase 16 dont la sortie fournit un signal d'erreur $e(t)$ appliqué à l'entrée d'un filtre intégrateur de boucle 17, lui-même étant reliée à l'entrée de commande de fréquence de l'oscillateur commandé en tension 10.

Ces trains numériques démodulés $X(t)$ et $Y(t)$ sont envoyés également sur les entrées d'un circuit de régénération 19. Ce circuit 19 a pour but de délivrer des signaux rectangulaires à partir des signaux distordus disponibles à la sortie du démodulateur, la régénération étant fondée sur l'estimation, à des instants convenablement choisis, du signal rectangulaire qui a la plus grande probabilité d'être représenté par le signal distordu obtenu.

La régénération est une partie commune aux trois types de démodulation cohérente : elle est réalisée grâce à une récupération de rythme.

La récupération de rythme est effectuée à partir des signaux démodulés (par détection des transitions sur les voies X et Y par exemple). Elle est utilisée pour les traitements numériques de restitution de l'information.

Un circuit 18, selon l'invention, permet d'effectuer la comparaison bit à bit entre le signal d'entrée après démodulation avant régénération, avec le même signal après régénération.

L'estimateur de phase 16 a pour rôle d'obtenir une référence de phase stable afin d'extraire de façon correcte les différents sauts de phase porteurs de l'information par le circuit de démodulation.

Dans la chaîne de réception, avec démodulation directe, l'estimateur de phase 16 fonctionne par exemple à partir d'un système de démodulation à boucle de COSTAS. Dans ce type de système, la tension d'erreur e nécessaire pour verrouiller la boucle de phase est obtenue directement à partir des trains démodulés X(t) et Y(t). En effet, il est possible d'obtenir, à partir de ces deux signaux, un signal d'erreur caractéristique de déphasage $\theta$ entre la porteuse reçue et le signal d'oscillation locale.

Comme décrit dans le brevet US 4559 499 l'estimateur peut être du type "signe de sin $4\theta$", $\theta$ étant le déphasage entre la porteuse locale fournie par l'oscillateur 10 et la porteuse reçue.

Le schéma représenté sur la figure 2 permet de comprendre le fonctionnement d'une tel estimateur.

Z(t) est le signal composite résultant de la combinaison des deux porteuses modulées en quadrature à l'émission

$$Z(t) = \rho(t) [\cos(\omega_{o}t + \phi(t))].$$

Soient x(t) et y(t) les signaux de modulation sur ces porteuses à l'émission, x(t) = y(t) dans l'exemple représenté et la phase de modulation est $\phi = \frac{\pi}{4}$. Soient X(t) et Y(t) les signaux démodulés à la réception sur les porteuses en quadrature issues de l'oscillateur local, $\theta$ étant le déphasage entre les porteuses à l'émission (PE) et à la réception (PR). Pour estimer ce déphasage, une fonction d'erreur est calculée. Si S(t) = X(t) + Y(t) et D(t) = X(t) - Y(t), il est possible de montrer que la fonction X(t).Y(t).S(t).D(t) = + $\frac{1}{2}\rho^{4}(t)$ sin $4\theta$.

Cette fonction a donc une amplitude variable en fonction du temps et elle varie également en fonction de $\theta$ suivant sin $4\theta$. A partir de cette fonction, il est possible d'obtenir un signal d'erreur en remarquant que sin $4\theta$ change de signe lorsque $\theta$ passe d'un secteur de $\frac{\pi}{4}$ à un secteur adjacent, dans la figure déterminée par des axes orthogonaux représentatifs des porteuses émises en quadrature, donnant les valeur x(t) et y(t), et les bissectrices de ces axes correspondant aux phases de modulation à l'émission. Soient A, B, C...H ces secteurs sur la figure 2.

La fonction d'erreur e(t) = signe (+ $\frac{1}{2}\rho^{4}(t)$ sin $4\theta$) est positive dans les secteurs A, C, E, G et négative dans les secteurs B, D, F et H.

Ce signe est le résultat du produit des signes des différentes composantes X(t), Y(t), S(t) et D(t).

Pour connaître ce signe un tel estimateur de phase peut utiliser par exemple soit des multiplicateurs analogiques, soit un circuit logique réalisant la fonction "OU EXCLUSIF", qui est identique à la fonction signe du produit.

En cas de faux accrochage de la porteuse locale, les signaux reçus sont erronés mais correspondent à un état possible du signal vis-à-vis de l'estimateur de phase, d'où la nécessité d'une correction comme prévu dans le procédé de l'invention.

Le dispositif proposé consiste en la comparaison bit par bit entre le signal régénéré et le même signal non régénéré afin d'obtenir une information permettant de différencier le bon du faux accrochage pour pourvoir ensuite faire une correction au niveau de l'oscillateur 10.

Ceci est rendu possible, car bien que les signaux démodulés soient erronés, ils sont au bon débit et rendent donc possible la récupération du rythme.

Sur la figure 3 est représenté un exemple de réalisation du dispositif de détection de faux accrochage selon l'invention.

Une première bascule 20, ici de type D, reçoit sur son entrée le signal démodulé non régénéré, par exemple le signal X(t), (ce pourrait tout aussi bien être le signal Y(t)), et sur son entrée horloge le signal rythme récupéré. Sur la sortie de cette bascule on obtient donc un signal régénéré.

Une deuxième bascule 21, ici de type D, reçoit sur son entrée le même signal d'entrée, donc X(t), et sur son entrée horloge le signal régénéré après passage dans un circuit retard réglable 22. Cette bascule permet d'effectuer la comparaison bit à bit entre le niveau du signal d'entrée après régénération en un instant choisi en milieu du temps bit du signal d'entrée et le niveau du même signal avant régénération en fin de temps bit - (réglable par le délai $\tau$).

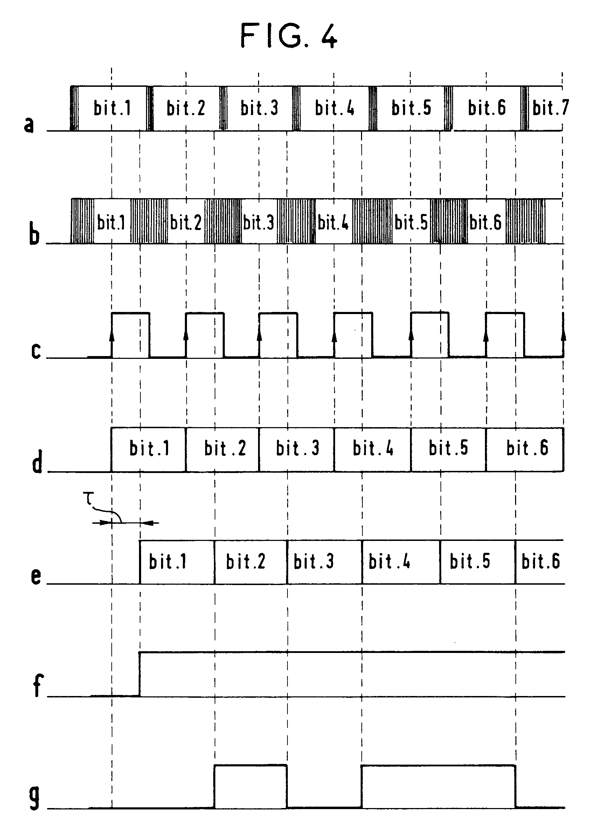

Le fonctionnement d'un tel circuit est illustré à l'aide des courbes de la figure 4, où :

a) représente le diagramme de l'oeil du signal d'entrée (au point A) après limitation et avant régénération dans le cas d'un bon accrochage. L'oeil étant saturé, les transitions sur les flancs sont affectés d'une gigue de faible amplitude due en particulier au filtrage.

b) représente le diagramme de l'oeil du signal d'entrée (au point A) après limitation et avant régénération mais dans le cas d'un faux accrochage.

On remarque que les transitions de l'oeil présentent une gigue nettement plus importante, le domaine temporel des transitions sur les flancs est beaucoup plus étendu.

Il suffit donc de faire une détection sur un des deux flancs du diagramme de l'oeil à un instant situé dans le domaine des transitions du cas b) et en dehors du domaine des transitions du cas a), pour vérifier s'il y a ou pas faux accrochage.

Dans l'exemple cité, c'est la fin du temps bis qui est choisie ; on pourrait tout aussi bien faire la détection sur le début du temps bit.

c) représente le signal rythme récupéré (au point B), rythme qui permet la régénération des signaux démodulés.

d) représente le diagramme de l'oeil du signal après régénération dans le cas d'un bon ou d'un faux accrochage. (Régénération par pointage du signal a) ou b) à l'instant optimum par le signal c)).

e) représente le signal régénéré après le retard $\tau$ (au point D), retard destiné à amener le front de montée du signal régéréré à proximité des flancs du signal non régénéré dans le cas d'un bon (vrai) accrochage, c'est-à-dire au milieu des transitions dans le cas d'un faux accrochage. Il est alors possible d'effectuer une comparaison bit à bit entre le signal régénéré et le signal non régénéré en un instant défini par le retard $\tau$.

f) représente le signal de sortie de la deuxième bascule 21 dans le cas d'un bon accrochage (point E).

Le pointage du signal a) par le signal e) donne un niveau constant, les signaux a) et e) étant totalement corrélés (comparaison bit à bit).

g) représente le même signal de sortie dans le cas d'un faux accrochage (point E).

Le pointage du signal b) par le signal e) au milieu des transitions donne en sortie de la bascule 21 un signal aléatoire au cours du temps (train d'impulsions).

Le point E (sortie de la bascule 21) délivre donc une information différenciant le bon accrochage (niveau constant) d'un faux accrochage (train d'impulsions) qu'il est possible d'utiliser comme élément correcteur lors de la récupération de porteuse pendant la phase de recherche.

Il est bien entendu que la présente invention n'a été décrite et représentée qu'à titre d'exemple préférentiel et que l'on pourra remplacer ses éléments constitutifs par des éléments équivalents sans pour autant sortir du cadre de l'invention.

Ainsi le dispositif ci-dessus a été décrit pour un signal modulé à quatre états de phase. Cet exemple n'est évidemment pas limitatif et la chaîne de réception décrite est applicable à la réception de tout signal à modulation numérique qui peut se mettre sous la forme de deux porteuses en quadrature de phase.

Ainsi le procédé de l'invention est applicable à la démodulation numérique cohérente de signaux non situés dans la gamme des hyperfréquences.

**Revendications**

1. Procédé de détection de faux accrochages de fréquence entre un signal (OL) issu d'un oscillateur local (10) et un signal d'entrée (E) à démoduler en démodulation cohérente à plusieurs états de phase, caractérisé en ce qu'il comprend:
   - une étape de comparaison bit à bit entre le niveau du signal d'entrée (X(t)) après démodulation (12) et avant régénération (19), et le niveau du signal d'entrée après régénération (19), à un instant prédéterminé du temps bit dudit signal d'entrée (E) où le diagramme de l'oeil dudit signal d'entrée démodulé (X(t)) non régénéré présente des transitions lorsqu'un faux accrochage de fréquence est réalisé et où le diagramme de l'oeil dudit signal d'entrée démodulé (X(t)) non régénéré ne présente pas de transitions lorsqu'un vrai accrochage de fréquence est réalisé;
   - une étape de correction éventuelle dudit signal (OL) issu dudit oscillateur local (10), de manière à accrocher celui-ci, en fréquence et en phase, sur ledit signal d'entrée (E) à démoduler.

2. Procédé selon la revendication 1, caractérisé en ce que ledit instant prédéterminé est compris dans la deuxième moitié dudit temps bit dudit signal d'entrée (E).

3. Dispositif de détection de faux accrochages de fréquence, dans une chaîne de réception comportant un circuit de démodulation directe d'un signal modulé résultant du mélange de deux porteuses en quadrature modulées par des signaux numériques dont l'entrée est couplée à l'entrée de signal reçu, associé à un oscillateur (10) à la fréquence porteuse du signal reçu (E), commandable pour que la phase du signal (OL) issu dudit oscillateur (10) coïncide avec la phase dudit signal reçu (E), et délivrant lesdits signaux numériques démodulés (X(t),Y-(t)), et comportant en outre un estimateur de phase (16) à deux entrées couplées aux sorties de signaux numériques démodulés (X(t),Y-(t)), ledit estimateur de phase (16) délivrant un signal fonction de l'écart de phase (Θ) entre la porteuse reçue et ledit signal (OL) issu dudit oscillateur (10) à l'entrée de commande dudit oscillateur (10) par l'intermédiaire d'un filtre (17) intégrateur de boucle, caractérisé en ce qu'il comprend un circuit de comparaison (18) situé sur l'une des deux voies véhiculant lesdits signaux numériques démodulés (X(t)),Y(t)), entre l'entrée et la sortie d'un circuit de régénération (19), ledit circuit de comparaison (18) effectuant une comparaison bit à bit entre le niveau dudit signal d'entrée (X(t)) de la voie considérée et le niveau du signal régénéré, à un instant prédéterminé du temps bit où le diagramme de l'oeil dudit signal d'entrée (X(t)) de la voie considérée présente des transitions lorsqu'un faux accrochage de fréquence est réalisé et où le diagramme de l'oeil dudit signal d'entrée (X(t)) de ladite voie considérée ne présente pas de transitions lorsqu'un vrai accrochage de fréquence est réalisé, ledit circuit de comparaison (18) réalisant une éventuelle correction dudit signal (OL) issu dudit oscillateur local (10), de manière à accrocher celui-ci, en fréquence et en phase, sur ledit signal d'entrée (E) à démoduler.

4. Dispositif selon la revendication 3, caractérisé en ce que ledit circuit de comparaison (18) comprend deux bascules (20,21) recevant chacune sur une entrée (D) ledit signal d'entrée (X(t)) démodulé, la première bascule (20) recevant sur son entrée horloge (H) un signal rythme récupéré, la deuxième bascule (21) recevant sur son entrée horloge (H) le signal de sortie de ladite première bascule (20) retardé par un circuit retardateur (22).

5. Dispositif selon la revendication 4, caractérisé en ce que lesdites bascules (20,21) sont des bascules de type D.

## Claims

1. A method of detecting false frequency locks between a signal (OL) issued from a local oscillator (10) and an input signal (E) to be demodulated by coherent multiphase demodulation, characterized in that it comprises:
   - comparing bit by bit the level of the input signal (X(t)) after demodulation (12) and prior to regeneration (19) and the level of the input signal after regeneration (19), at a predetermined instant of the bit time of said input signal (E), where the eye diagram of said non-regenerated, demodulated signal (X(t)) presents transitions when a false frequency lock is effected, and where the eye diagram of said non-regenerated, demodulated input signal (X(t)) does not present transitions when a true frequency lock is effected; and
   - possibly correcting said signal (OL) output from said local oscillator (10), so as to lock the latter by frequency and phase onto said input signal to be demodulated.

2. A method according to claim 1, characterized in that said predetermined instant is comprised in the second half of said bit time of said input signal (E).

3. A device for detecting false frequency locks in a receiving chain comprising a direct demodulation circuit for demodulating a modulated signal resulting from the mixture of two quadrature carriers modulated by digital signals, whose input is coupled to the input of the received signal, and being associated with an oscillator (10) operating at the carrier frequency of the received signal (E), adapted to be controlled so as to make the phase of the signal (OL) output by said oscillator (10) coincide with the phase of said received signal (E), and delivering said demodulated digital signals (X(t), Y(t)), and further comprising a phase estimator (16) having two inputs coupled to the outputs for the demodulated signals (X(t), Y(t)), said phase estimator delivering a signal, which depends upon the phase distance (Θ) existing between the carrier received and said signal (OL) output from said oscillator (10), to the control input of said oscillator (10) via a loop integrator filter, characterized in that the device comprises a comparison circuit (18) situated in one of the two channels which transmit said demodulated digital signals (X(t), Y(t)) between the input and the output of a regeneration circuit (19), said comparison circuit (18) effectuating a comparison bit by bit between the level of said input signal (X(t)) of the considered channel and the level of the regenerated signal, at a predetermined instant of the bit time, where the eye diagram of said input signal (X(t)) of the considered channel presents transitions when a false frequency lock is effected and where the eye diagram of said input signal (X(t)) of said considered channel does not present transitions when a true frequency lock is effected, said comparison circuit (18) ensuring a possible correction of said signal (OL) output by said local oscillator (10), so as to lock it by frequency and phase on said input signal (E) to be demodulated.

4. A device according to claim 3, characterized in that said comparison circuit (18) includes two flip-flops (20, 21) adapted to receive each said demodulated input signal (X(t)) at an input (D), the first flip-flop (20) receiving a recovered clock signal at its clock input (H), the second flip-flop (21) receiving the output signal of said first flip-flop (20), delayed by a delay circuit (22), at its clock input (H).

5. A device according to claim 4, characterized in that said flip-flops (20, 21) are D-type flip-flops.

**Patentansprüche**

1. Verfahren zur Erfassung falscher Frequenzeinrastungen zwischen einem Signal (OL), das von einem lokalen Oszillator (10) geliefert wird, und einem Eingangssignal (E), das durch kohärente Mehrphasendemodulation demoduliert werden soll, dadurch gekennzeichnet, daß es folgende Schritte aufweist:
   - Vergleich Bit für Bit des Pegels des Eingangssignals (X(t)) nach der Demodulation (12) und vor der Regeneration (19) mit dem Pegel des Eingangssignals nach der Regeneration (19) in einem vorbestimmten Zeitpunkt der Bitdauer des Eingangssignals (E), in welchem das Augendiagramm des nichtregenerierten, demodulierten Eingangssignals (X(t)) Übergänge aufweist, wenn eine falsche Einrastung erfolgt ist, und in welchem das Augendiagramm des nichtregenerierten, demodulierten Eingangssignals keine Übergängen aufweist, wenn eine richtige Frequenzeinrastung erfolgt ist; und
   - ggf. des vom lokalen Oszillator (10) gelieferten Signals (OL), derart, daß es nach Frequenz und Phase mit dem zu demodulierenden Eingangssignal (E) synchron einrastet.

2. Verfahren nach Anspruch 1, dadurch gekennzeichnet, daß der vorbestimmte Zeitpunkt in der zweiten Hälfte der Bitdauer des Eingangssignals (E) liegt.

3. Einrichtung zur Erfassung falscher Frequenzeinrastungen in einer Empfangskette, die eine Schaltung zum direkten Demodulieren eines modulierten Signals aufweist, das aus der Mischung zweier Träger in Quadratur hervorgeht, die von digitalen Signalen moduliert sind, wobei der Eingang der Empfangskette an den Eingang für das empfangene Signal angeschlossen ist und der Demodulationsschaltung ein Oszillator (10) zugeordnet ist, der mit der Trägerfrequenz des Empfangssignals (E) schwingt und so steuerbar ist, daß die Phase des vom Oszillator (10) gelieferten Signals (OL) mit der Phase des Empfangssignals (E) übereinstimmt, wobei die Demodulationsschaltung die demodulierten, digitalen Signale (X(t), Y(t)) liefert; und wobei die Einrichtung weiter einen Phasenschätzkreis (16) mit zwei Eingängen aufweist, die an die Ausgänge der demodulierten, digitalen Signale (X(t), Y(t)) angeschlossen sind, wobei der Phasenschätzkreis (16) über ein Schleifenintegrationsfilter (17) an den Steuereingang des Oszillators (10) ein Signal liefert, das vom Phasenabstand (Θ) zwischen dem empfangenen Träger und dem vom Oszillator (10) gelieferten Signal (OL) abhängt, dadurch gekennzeichnet, daß die Einrichtung eine Vergleichsschaltung (18) aufweist, die in einem der beiden Kanäle, die die demodulierten, digitalen Signale (X(t), Y(t)) transportiert, zwischen dem Eingang und dem Ausgang einer Regenerationsschaltung (19) angeordnet ist, wobei die Vergleichsschaltung (18) einen Vergleich Bit für Bit zwischen dem Pegel des Eingangssignals (X(t)) des betreffenden Kanals und dem Pegel des regenerierten Signals in einem vorbestimmten Zeitpunkt der Bitdauer durchführt, in welchem das Augendiagramm des Eingangssignals (X(t)) des betreffenden Kanals Übergänge dann aufweist, wenn eine falsche Frequenzeinrastung erfolgt, und in welchem das Augendiagramm des Eingangssignals (X(t)) des betreffenden Kanals keine Übergänge dann aufweist, wenn eine richtige Frequenzeinrastung erfolgt ist, wobei die Vergleichsschaltung (18) eine eventuelle Korrektur des vom lokalen Oszillator (10) gelieferten Signals (OL) durchführt, so daß dieser nach Frequenz und Phase mit dem zu demodulierenden Eingangssignal (E) synchronisiert ist.

4. Einrichtung nach Anspruch 3, dadurch gekennzeichnet, daß die Vergleichsschaltung (18) zwei Kippschaltungen (20, 21) aufweist, die je das demodulierte Eingangssignal (X(t)) an einem Eingang (D) empfangen, wobei die erste Kippschaltung (20) an ihrem Takteingang ein wiedergewonnenes Taktsignal empfängt, während die zweite Kippschaltung (21) an ihrem Takteingang (H) das von einer Verzögerungsschaltung (22) verzögerte Ausgangssignal der ersten Kippschaltung (20) empfängt.

5. Einrichtung nach Anspruch 4, dadurch gekennzeichnet, daß die Kippschaltungen (20, 21) D-Flipflops sind.

# FIG.1

X(t)

Y(t)

e(t)

E

OL

# FIG.2

$$z(t) = \rho(t)\cos(\omega_0 t + \varphi(t))$$

y(t)

y(t)

Y(t)

z

B

C

D

A

PR

$\pi/4$

X(t)

$\theta$

PE

E

x(t)

x(t)

x(t)

H

F

G

# FIG.3

X(t)

D    Q

H

A

B

C

$\tau$

D    Q

H

D

E

EP 0 309 306 B1

# FIG. 4

9